(19) Europäisches Patentamt
European Patent Office
Office européen des brevets

(11) **EP 2 579 418 A1**

(12) **EUROPEAN PATENT APPLICATION**
published in accordance with Art. 153(4) EPC

(43) Date of publication:
**10.04.2013 Bulletin 2013/15**

(51) Int Cl.:
**H02J 7/00** (2006.01)

(21) Application number: **10852038.8**

(22) Date of filing: **24.11.2010**

(86) International application number:
**PCT/CN2010/079089**

(87) International publication number:
**WO 2011/147169 (01.12.2011 Gazette 2011/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.05.2010 CN 201010186854**

(71) Applicant: **ZTE Corporation**
**Shenzhen, Guangdong 518057 (CN)**

(72) Inventor: **XUE, Bing**
**Shenzhen**
**Guangdong 518057 (CN)**

(74) Representative: **Ilgart, Jean-Christophe et al**
**BREVALEX**
**95 rue d'Amsterdam**
**75378 Paris Cedex 8 (FR)**

(54) **METHOD AND DEVICE FOR MANAGING BATTERIES**

(57)     The disclosure discloses a method for battery management. The method includes: monitoring a total load current, a battery capacity, a charging current ratio, and the number of operating rectifiers; calculating a current-limiting point according to the total load current, the battery capacity, the charging current ratio, and the number of operating rectifiers; and adjusting the current limiting point and a rectifier operating voltage according to a battery current, and regulating the battery current to reach a preset current-limiting value. The disclosure further provides a corresponding device for battery management. The disclosure combines the current-limiting point adjustment and output voltage adjustment in battery management, thereby realizing real time stable current-limiting adjustment of the battery and extending lifetime of the battery.

Fig. 1

**Description**

**TECHNICAL FIELD**

The disclosure relates to the field of battery management, and in particular to a method and a device for battery management.

**BACKGROUND**

With the construction and development of mobile communication network, there is an increasing requirement for corresponding combined power supply used for communication. In order to ensure reliable operation of communication equipment, the combined power supply is generally configured with a battery, wherein the Valve Regulated Lead Acid Battery has become the primary battery for a combined power supply system due to its features such as small volume, stable voltage, zero pollution, and high discharge capability. As the cost of the battery constitutes a large percentage in the entire system, how to realize effective management and maintenance of battery in a reasonable and reliable way and enhance the battery lifetime has also become the focus of competition of various power supply manufacturers. The main part in battery management is the management of charging and discharging, which mainly includes discharging protection and charging protection. Battery management is usually carried out by controlling the output current of a rectifier, wherein the control method may be divided into voltage adjustment and current-limiting point adjustment.

Voltage adjustment applies to a non intelligent rectifier. The non intelligent rectifier performs current-limiting management by adjusting the voltage difference between the voltage of the battery and the output voltage of the rectifier.

Current-limiting point adjustment applies in general to an intelligent rectifier. The intelligent rectifier itself is configured with a processor and receives a command issued by a system via an RS485 bus or Controller Area Network (CAN) bus. The system calculates a current-limiting point according to a charging current and a load current configured currently and sends the current-limiting point to the rectifier.

During the specific implementation, the inventor of the present disclosure discovers that for a system adopting an intelligent rectifier, if only current-limiting point adjustment is adopted for battery charging management, then the voltage of the rectifier is directly adjusted to a floating charging voltage or a uniform charging voltage, and the system is not stable. Moreover, a sudden change in the charging current will shorten the battery lifetime if the rectifier is frequently activated or deactivated.

**SUMMARY**

The main purpose of the disclosure is to provide a method for effective battery management based on an intelligent rectifier and combined with voltage adjustment and current-limiting point adjustment to realize stable charging and discharging. The disclosure also provides a corresponding device.

The disclosure provides a method for battery management, including:

monitoring a total load current, a battery capacity, a charging current ratio, and the number of operating rectifiers;

calculating a current-limiting point according to the total load current, the battery capacity, the charging current ratio, and the number of operating rectifiers; and

adjusting the current-limiting point and a rectifier operating voltage according to a battery current, and regulating the battery current to reach a preset current-limiting value.

Wherein before the adjusting the current-limiting point and a rectifier operating voltage according to a battery current and regulating the battery current to reach a preset current-limiting value, the method may further include: lowering a rectifier output voltage when the rectifier output voltage is greater than a target voltage.

Wherein after the adjusting the current-limiting point and a rectifier operating voltage according to a battery current and regulating the battery current to reach a preset current-limiting value, the method may further include: detecting a current of each set of operative batteries; and lowering the current-limiting point by a preset first step size when any battery current is greater than or equal to a preset first threshold.

Wherein after the adjusting the current-limiting point and a rectifier operating voltage according to a battery current and regulating the battery current to reach a preset current-limiting value, the method may further include: detecting a current of each set of operative batteries; and lowering an output voltage by a preset second step size when any battery current is greater than or equal to a preset second threshold and smaller than the first threshold.

Wherein after the detecting a current of each set of operative batteries, the method may further include: detecting a state of a rectifier; raising the current-limiting point by a preset third step size when a current of any operative battery is smaller than a preset discharging threshold and the rectifier is in a current-limiting state; and stopping raising the current-limiting point when a current of any operative battery is greater than or equal to the current-limiting value.

Wherein, after the detecting a state of a rectifier, the method may further include: adjusting the output voltage to a target voltage stepwise according to a preset forth step size when the rectifier is not in the current-limiting state.

The disclosure further provides a device for battery management, including:

a monitoring module configured to monitor a total load current, a battery capacity, a charging current ratio, and the number of operating rectifiers;

a calculating module configured to calculate a current-limiting point according to the total load current, the battery capacity, the charging current ratio, and the number of operating rectifiers; and

an adjusting module configured to adjust the current-limiting point and a rectifier operating voltage according to a battery current and regulate the battery current to reach a preset current-limiting value.

The device may further include: a rectifier output voltage adjustment module configured to lower a rectifier output voltage when the rectifier output voltage is greater than a target voltage.

The device may further include: a first detecting module configured to detect a current of each set of operative batteries; and a current-limiting point adjustment module configured to lower the current-limiting point by a preset first step size when any battery current is greater than or equal to a preset first threshold.

The device may further include: an output voltage adjustment module configured to lower an output voltage by a preset second step size when any battery current is greater than or equal to a preset second threshold and smaller than the first threshold.

The device may further include: a second detecting module configured to detect a state of a rectifier; and the current-limiting point adjustment module is further configured to raise the current-limiting point by a preset third step size when a current of any operative battery is smaller than a preset discharging threshold and the rectifier is in a current-limiting state, and stop raising the current-limiting point when a current of any operative battery is greater than or equal to the current-limiting value.

Wherein, the output voltage adjustment module may be further configured to adjust the output voltage to a target voltage stepwise according to a preset forth step size when the rectifier is not in the current-limiting state.

The disclosure combines current-limiting point adjustment and output voltage adjustment in battery management, thereby realizing real-time stable current-limiting adjustment of a battery and extending the lifetime of the battery.

## BRIEF DESCRIPTION OF THE DRAWINGS

Fig. 1 is a flowchart of an embodiment of a method for battery management according to the disclosure;

Fig. 2 is a diagram of specific adjustment in an embodiment of the method for battery management according to the disclosure; and

Fig. 3 is a structural diagram of an embodiment of a device for battery management according to the disclosure.

## DETAILED DESCRIPTION

It should be understood that an embodiment described here is merely for explaining the disclosure and is not for limiting the disclosure.

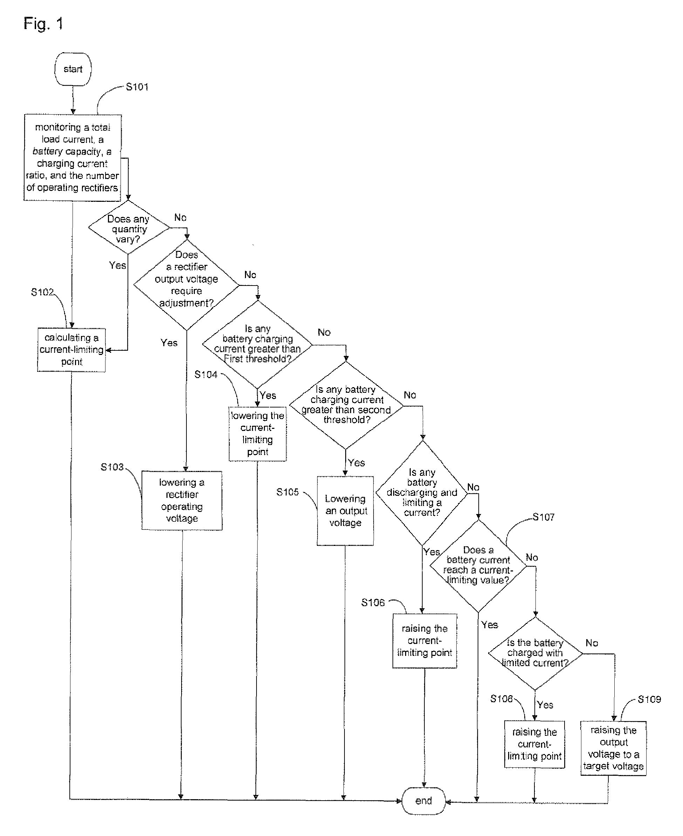

A method for battery management provided by the disclosure is elaborated hereinafter with reference to Fig. 1, which is a flowchart of an embodiment of the method for battery management according to the disclosure.

The basic purpose of adjusting a current-limiting point in the disclosure is to ensure that a battery is not overcharged or undercharged, that is, to keep a charging current of the battery to be around a set current-limiting value, normally within the range from e to b times of the current-limiting value, wherein the values of e and b may be configured flexibly depending on the requirement, in general e equals to 0.9, and b equals to 1.1. the current-limiting value of each set of batteries is calculated by battery capacity x charging current ratio. Specifically, the following steps are adopted:

Step S101. monitoring a total load current, a battery capacity, a charging current ratio, and the number of operating rectifiers;
first, a device for battery management monitors the total load current, the battery capacity, the charging current ratio, and the number of operating rectifiers in real time, so as to calculate a current-limiting point in Step S102;

Step S102. calculating a current-limiting point;
the current-limiting point is calculated according to the total load current, the battery capacity, the charging current ratio, and the number of operating rectifiers via the following formula:

$$\text{current-limiting point} = (\text{total load current} + \text{battery capacity} \times \text{charging current ratio}) / \text{the number of rectifiers operating normally};$$

a rough estimation of the current-limiting point of a rectifier can be acquired promptly by this formula, such that a battery charging current may be locked promptly within a reasonable range. Battery management can be implemented based merely on this formula if all quantities are very accurate, however, all devices for battery management may possibly have errors, and an abnormality may occur, thus requiring fine adjustment for correction;
the current-limiting point is recalculated according to the formula if any one of the total load current, the battery capacity, the charging current ratio, and the number of operating rectifiers in the formula varies, otherwise Step S103 is executed. To avoid frequent calculation, a threshold may be set for each quantity, for example, a load variation is deemed to have happened only when the load varies by 10 A. A rectifier operating voltage is adjusted according to a battery current after the current-limiting point is calculated, and the battery current is regulated to reach a preset current-limiting value;

Step S103. adjusting an rectifier operating voltage;
since some power systems are not configured with a load splitter due to cost considerations, it is impossible to detect a load current; considering this case, the current limitation and voltage adjustment may be performed directly according to a battery current;
it is required to lower a rectifier output voltage when the rectifier output voltage is greater than a target voltage, for example, when the system changes from floating charging to testing. Voltage lowering can be done directly since it will not increase the battery charging current. The step size of the lowering should not be too large, and is proposed to be between 0.1 V and 0.3 V;
it is then determined if increase in the voltage is required when lowering of the rectifier output voltage is not required. It is required to increase the rectifier output voltage when the rectifier output voltage is smaller than a target voltage, for example, when the system changes from testing to floating charging. As the increase in the voltage will increase the battery charging current, it is required to detect the battery current at any time during the voltage increasing process, so as to limit the battery current to a reasonable range. The following steps are all based on the increase in the voltage;

Step S104. lowering the current-limiting point;
after the first adjustment, a prompt correction is required for a possible overly large battery charging current which may severely damage the battery, so as to avoid large battery overcharging. It is required to determine in Step S103 whether the battery is charged with an overly large current, and then the current-limiting point is adjusted; the specific steps are:

A. detecting the current of each set of operative batteries; and

B. lowering the current-limiting point by a first step size when any battery is charged with an overly large current;

the adjustment of the current-limiting point at this moment can promptly reduce a battery charging current. An overly large battery charging current means that the battery charging current is greater than or equals to a preset first threshold which should be greater than the product of the battery capacity x the charging current ratio; the first threshold may be configured according to a usage scenario or a user requirement, for example, the battery charging current is deemed to be too large when it is greater than **a** times of a current-limiting value, wherein **a** usually takes the value of 1.3. The value of the first step size **c** may also be configured as desired, for example, 10% each time. Step S105 is executed if all battery charging currents are reduced to be within the first threshold;

Step S105. lowering an output voltage;
although Step S104 solves the problem of an overly large battery charging current, a battery may still in an overcharging state, namely, the battery charging current is greater than a second threshold and smaller than the first threshold, wherein the second threshold takes the value of **b** times of the current-limiting value, that is, the battery charging current is between **b** times of the current-limiting value and **a** times of the current-limiting value, which, although not detrimental to a battery, is not allowable; while the promptness of adjustment of the battery current is not very important at this moment, and the adjustment may be done for system stability by reducing an output voltage, wherein the output voltage is reduced each time by a preset second step size **d**. the second step size **d** can not be too big, and is proposed to be between 0.1 V and 0.3 V. Step S106 is executed if no battery is overcharged;

Step S106. raising the current-limiting point;
Step S106 is mainly for the purpose of preventing abnormal battery discharging. Although Step S105 solves the problem of battery overcharging, a battery may be in a discharging state, which is not allowable. There are two possible kinds of battery discharging, one is natural discharging, and the other is current-limiting discharging. The natural discharging is a normal condition during a process such as system outage, testing and the like, in which case a rectifier does not have any output current and is powered by a battery; while, the current-limiting discharging is an abnormal condition which means a rectifier current-limiting point is too small to support the requirement of a load, and part of the current is provided by a battery;
specifically, the state of the rectifier is detected; the current-limiting point is raised by a preset third step size when the current of any operative battery is smaller than the preset discharging threshold and the rectifier is in a current-limiting state; the raising of the current-limiting point is stopped when the current of any operative battery is greater than or equals to the current-limiting value. The discharging threshold is preset according to different battery specification parameters;
the occurrence of current-limiting discharging is an abnormal condition and requires prompt adjustment, in which case the current-limiting point may be raised by a third step size by adjustment of the current-limiting point. The third step size may be configured as desired, for example, 10% each time. Step S106 is executed if no battery is abnormally discharged;

Step S107. determining whether a battery charging current reaches the current-limiting value;
after this step, no battery is overcharged or discharged abnormally, namely, all battery currents are smaller than **b** times of the current-limiting value, in which case, adjustment is stopped as long as any group of batteries are greater than the third threshold, that is, **e** times of the current-limiting value;

Step S108 is executed if all battery charging currents are smaller than **e** times of the current-limiting point;
Step S108. raising the current-limiting point;
when all battery charging currents are smaller than e times of the current-limiting point and a rectifier is in a current-limiting state, it means the rectifier current-limiting point is too small, in which case voltage adjustment is ineffective, and only raising the current-limiting point by a preset third step size f is effective; in this case a battery is still being charged, but with insufficient charging current, therefore, the preset third step size f should not be too big so as to avoid battery overcharging, wherein the step size may be increased stepwise with 10% of a target current-limiting value of the battery. Step S109 is executed if the rectifier is not in a current-limiting state;

and Step S109. raising the output voltage to a target voltage;
up to Step S109, all situations in the system are normal and the output voltage may be adjusted stepwise to a target voltage. The forth step size for raising or lowering should not be too big and is proposed to be between 0.1 V and 0.3 V; up to this step, a flow of current limitation and voltage adjustment is completed, and the battery management is regulated periodically according to the previous flow based on sampled data.

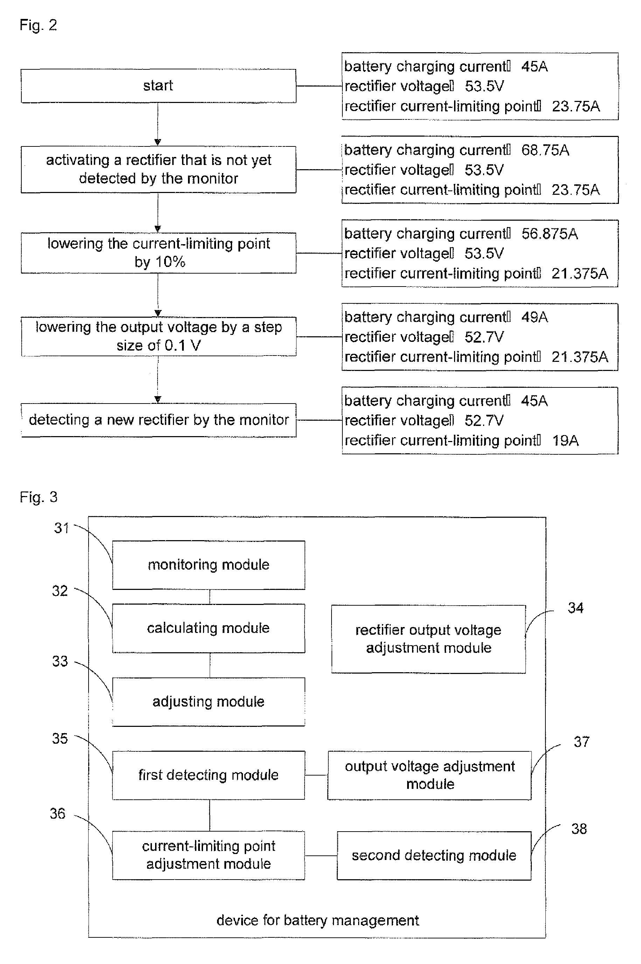

Next, a specific example of battery management is described combined with the previous flow and Fig. 2, regardless of temperature compensation of the current, then a battery current-limiting value is $300 \times 0.15 = 45$ A, a rectifier current-limiting point is $(50+45)/4 = 23.75$ A. Provided everything turns out normal in system detection, a battery charging current can definitely be limited within the current-limiting value, and the adjustment ends.

If a rectifier is manually activated at this moment, a monitor however has not detected it at the time, then during this period, the total output current of the rectifier is $5 \times 23.75 = 118.75$ A, except for 50 A for a load, the remaining 68.75 A is entirely for charging the battery; since the remaining current is much greater than $45 \times 1.3 = 58.5$ A, in this case the system will reduce the current-limiting point by 10% stepwise, and after a first adjustment, the battery charging current will be reduced to 56.875 A; since the charging current after the first adjustment is smaller than 58.5 A, in this case it is required to finely adjust the voltage to make the voltage lowered stepwise from 53.5 V with a step size of 0.1V; assuming the voltage is lowered to 52.7 V after being adjusted for eight times, and the battery charging current is 49 A, which is smaller than $45 \times 1.1 = 49.5$ A, then the fine-adjustment ends. If at this moment the monitor detects the rectifier, then the current-limiting point is recalculated: (50+45)/5=19 A, and the battery charging current is once again changed to 45 A. At this moment, the rectifier output voltage and the battery voltage are kept within a reasonable range of voltage difference, and even if a rectifier is added later on and the rectifier provides additional output capacity, the battery charging current will not be increased due to the constant voltage difference. A battery may maintain a high charging current for a long time if merely the voltage adjustment is adopted; on the other hand, if merely the current-limiting point adjustment is adopted, the desired adjustment can be done quickly after four times of adjustment in combination with the fine-adjustment of the current-limiting point; however, if a rectifier is activated at this moment, the rectifier further requires several times of adjustment, and a battery still needs to undergo a stage of overcharging. The advantage of combined adjustment of a current-limiting point and a voltage is explicitly shown.

The above scenario is the one in which battery overcharging is caused by activation of a rectifier, and a scenario in which battery overcharging is caused by a disconnection of rectifier communication is similar.

The battery management is performed by a method that combines the adjustment of a current-limiting point and an output voltage in an embodiment of the disclosure. The adjustment of the current-limiting point can promptly limit a battery current to a safe range, and the battery charging current is then finely adjusted by an output voltage within a safe range, until it reaches a current-limiting point. Due to the limitation of the output voltage, the battery charging current will not be affected even if there is a rectifier activation or deactivation operation during the adjustment, thereby prompt and stable adjustment is achieved and efficient battery management is realized.

Fig. 3 is a structural diagram of an embodiment of a device for battery management according to the disclosure.

The embodiment of the disclosure provides a device for battery management, including:

a monitoring module 31 configured to monitor a total load current, a battery capacity, a charging current ratio, and the number of operating rectifiers;

a calculating module 32 configured to calculate a current-limiting point according to the total load current, the battery capacity, the charging current ratio, and the number of operating rectifiers; and

an adjusting module 33 configured to adjust the current-limiting point and a rectifier operating voltage according to a battery current and regulate the battery current to reach a preset current-limiting value.

The device may further include:

a rectifier output voltage adjustment module 34 configured to lower a rectifier output voltage when the rectifier output voltage is greater than a target voltage.

The device may further include:

a first detecting module 35 configured to detect a current of each set of operative batteries; and

a current-limiting point adjustment module 36 configured to lower the current-limiting point by a preset first step size when any battery current is greater than or equal to a preset first threshold.

The device may further include:

an output voltage adjustment module 37 configured to lower an output voltage by a preset second step size when any battery current is greater than or equal to a preset second threshold and smaller than the first threshold.

The device may further include:

a second detecting module 38 configured to detect a state of a rectifier;

the current-limiting point adjustment module 36 is further configured to raise the current-limiting point by a preset third step size when the current of any operative battery is smaller than a preset discharging threshold and the rectifier is in a current-limiting state, and stop raising the current-limiting point when the current of any operative battery is greater than or equal to the current-limiting value.

The output voltage adjustment module 37 may be further configured to adjust the output voltage to a target voltage stepwise according to a preset forth step size when the rectifier is not in the current-limiting state.

Specifically, the basic formula with which the calculating module 32 calculates a current-limiting point according to the total load current, the battery capacity, the charging current ratio, and the number of operating rectifiers is as follows:

$$\text{current-limiting point} = (\text{total load current} + \text{battery capacity} \times \text{charging current ratio}) / \text{the number of rectifiers operating normally.}$$

A rough estimation of the current-limiting point of a rectifier can be acquired promptly by this formula, such that a battery charging current may be locked promptly within a reasonable range. Battery management may be implemented based merely on this formula if all quantities are very accurate, however, all devices for battery management may possibly have errors, and an abnormality may occur, which requires fine adjustment for correction.

The calculating module 32 recalculates the current-limiting point according to the formula if any one of the total load current, the battery capacity, the charging current ratio, and the number of operating rectifiers in the formula varies. To avoid frequent calculation, a threshold may be set for each quantity, for example, a load variation is deemed to have happened only when the load varies by 10 A.

Since some power systems are not configured with a load splitter due to cost considerations, it is impossible to detect a load current, in which case the current limitation and voltage adjustment may be performed directly according to a battery current.

It is required to lower a rectifier output voltage using the rectifier output voltage adjustment module 34 when the rectifier output voltage is greater than a target voltage, for example, when the system changes from floating charging to testing. Voltage lowering can be done directly since it will not increase a battery charging current. The step size of the lowering should not be too large, and is proposed to be between 0.1 V and 0.3 V.

It is then determined if increase in the voltage is required when lowering of the rectifier output voltage is not required. It is required to increase the rectifier output voltage using the rectifier output voltage adjustment module 34 when the rectifier output voltage is smaller than the target voltage, for example, when the system changes from testing to floating charging. As the increase in the voltage will increase a battery charging current, it is required to detect the battery current at any time during the voltage increasing process, so as to limit the battery current to a reasonable range. The following steps are all based on the increase in the voltage.

The current-limiting point adjustment module 36 lowers the current-limiting point by a preset first step size when any battery current is greater than or equal to a preset first threshold. The first threshold should be greater than the product of the battery capacity x the charging current ratio; the first threshold may be configured according to a usage scenario or a user requirement, for example, the battery charging current is deemed to be too large when it is greater than a times of the current-limiting value, wherein a usually takes the value of 1.3. The step size c can also be configured as desired, for example, 10% each time.

For system stability, the output voltage adjustment module 37 may adjust the output voltage by reducing the output voltage when any battery current is greater than or equal to a preset second threshold and smaller than the first threshold, wherein the output voltage is reduced each time by a preset second step size, which can not be too big, and is proposed to be between 0.1 V and 0.3 V.

The occurrence of current-limiting discharging is an abnormal condition and requires prompt adjustment which may be done by adjustment of the current-limiting point, namely, the current-limiting point adjustment module 36 may raise the current-limiting point by a third step size when the current of any operative battery is smaller than a preset discharging threshold and the rectifier is in a current-limiting state. The third step size may be configured as desired, for example, 10% each time. The discharging threshold is preset according to different battery specification parameters.

An embodiment of the disclosure performs battery management by a method that combines the adjustment of a current-limiting point and an output voltage. A battery current can be promptly limited to a safe range with the adjustment of a current-limiting point, and then the battery charging current can be finely adjusted by an output voltage within a safe range, until it reaches a current-limiting value. Due to the limitation of the output voltage, a battery charging current will not be affected even if there is a rectifier activation or deactivation operation during the adjustment, thus prompt and stable adjustment is achieved and efficient battery management is realized.

What described above is merely preferred embodiments of the disclosure but not intended for limiting the patent scope of the disclosure, any equivalent variation in structure or flow made using the content of the description and the figures of the disclosure, or direct or indirect application to other relevant fields shall be likewise included in the patent protection scope of the disclosure.

## Claims

**1.** A method for battery management, comprising:

monitoring a total load current, a battery capacity, a charging current ratio, and the number of operating rectifiers;
calculating a current-limiting point according to the total load current, the battery capacity, the charging current ratio, and the number of operating rectifiers; and
adjusting the current-limiting point and a rectifier operating voltage according to a battery current, and regulating the battery current to reach a preset current-limiting value.

2. The method for battery management according to claim 1, further comprising:

   before the adjusting the current-limiting point and a rectifier operating voltage according to a battery current and regulating the battery current to reach a preset current-limiting value,
   lowering a rectifier output voltage when the rectifier output voltage is greater than a target voltage.

3. The method for battery management according to claim 1, further comprising:

   after the adjusting the current-limiting point and a rectifier operating voltage according to a battery current and regulating the battery current to reach a preset current-limiting value,
   detecting a current of each set of operative batteries; and
   lowering the current-limiting point by a preset first step size when any battery current is greater than or equal to a preset first threshold.

4. The method for battery management according to claim 3, further comprising:

   after the adjusting the current-limiting point and a rectifier operating voltage according to a battery current and regulating the battery current to reach a preset current-limiting value,
   detecting a current of each set of operative batteries; and
   lowering an output voltage by a preset second step size when any battery current is greater than or equal to a preset second threshold and smaller than the first threshold.

5. The method for battery management according to claim 4, further comprising:

   after the detecting a current of each set of operative batteries,
   detecting a state of a rectifier;
   raising the current-limiting point by a preset third step size when a current of any operative battery is smaller than a preset discharging threshold and the rectifier is in a current-limiting state; and
   stopping raising the current-limiting point when a current of any operative battery is greater than or equal to the current-limiting value.

6. The method for battery management according to claim 5, further comprising:

   after the detecting a state of a rectifier,
   adjusting the output voltage to a target voltage stepwise according to a preset forth step size when the rectifier is not in the current-limiting state.

7. A device for battery management, comprising:

   a monitoring module configured to monitor a total load current, a battery capacity, a charging current ratio, and the number of operating rectifiers;
   a calculating module configured to calculate a current-limiting point according to the total load current, the battery capacity, the charging current ratio, and the number of operating rectifiers; and
   an adjusting module configured to adjust the current-limiting point and a rectifier operating voltage according to a battery current and regulate the battery current to reach a preset current-limiting value.

8. The device for battery management according to claim 7, further comprising:

   a rectifier output voltage adjustment module configured to lower a rectifier output voltage when the rectifier output voltage is greater than a target voltage.

9. The device for battery management according to claim 7, further comprising:

a first detecting module configured to detect a current of each set of operative batteries; and
a current-limiting point adjustment module configured to lower the current-limiting point by a preset first step size when any battery current is greater than or equal to a preset first threshold.

10. The device for battery management according to claim 9, further comprising:

an output voltage adjustment module configured to lower an output voltage by a preset second step size when any battery current is greater than or equal to a preset second threshold and smaller than the first threshold.

11. The device for battery management according to claim 10, further comprising:

a second detecting module configured to detect a state of a rectifier;
the current-limiting point adjustment module is further configured to raise the current-limiting point by a preset third step size when a current of any operative battery is smaller than a preset discharging threshold and the rectifier is in a current-limiting state, and stop raising the current-limiting point when a current of any operative battery is greater than or equal to the current-limiting value.

12. The device for battery management according to claim 11, wherein the output voltage adjustment module is further configured to adjust the output voltage to a target voltage stepwise according to a preset forth step size when the rectifier is not in the current-limiting state.

Fig. 1

Fig. 2

| | |
|---|---|
| start | battery charging current: 45A<br>rectifier voltage: 53.5V<br>rectifier current-limiting point: 23.75A |
| activating a rectifier that is not yet detected by the monitor | battery charging current: 68.75A<br>rectifier voltage: 53.5V<br>rectifier current-limiting point: 23.75A |
| lowering the current-limiting point by 10% | battery charging current: 56.875A<br>rectifier voltage: 53.5V<br>rectifier current-limiting point: 21.375A |
| lowering the output voltage by a step size of 0.1 V | battery charging current: 49A<br>rectifier voltage: 52.7V<br>rectifier current-limiting point: 21.375A |
| detecting a new rectifier by the monitor | battery charging current: 45A<br>rectifier voltage: 52.7V<br>rectifier current-limiting point: 19A |

Fig. 3

31 monitoring module

32 calculating module

33 adjusting module

34 rectifier output voltage adjustment module

35 first detecting module

37 output voltage adjustment module

36 current-limiting point adjustment module

38 second detecting module

device for battery management

# INTERNATIONAL SEARCH REPORT

| International application No. |
|---|
| PCT/CN2010/079089 |

**A. CLASSIFICATION OF SUBJECT MATTER**

H02J7/00(2006.01)i

According to International Patent Classification (IPC) or to both national classification and IPC

**B. FIELDS SEARCHED**

Minimum documentation searched (classification system followed by classification symbols)

IPC: H02J

Documentation searched other than minimum documentation to the extent that such documents are included in the fields searched

Electronic data base consulted during the international search (name of data base and, where practicable, search terms used)

WPI, EPODOC,VEN: battery, manage, monitor, voltage, limit, current

CNPAT, CNKI,CNABS:

**C. DOCUMENTS CONSIDERED TO BE RELEVANT**

| Category* | Citation of document, with indication, where appropriate, of the relevant passages | Relevant to claim No. |
|---|---|---|
| X | CN101515724A (ZTE CORP) 26 August 2009 (26.08.2009) the description page 2, lines 21-26, and page 6, line 9-page 7, line 20 | 1-12 |
| PX | CN101860059A (ZTE CORP) 28 May 2010 (28.05.2010) the whole document | 1-12 |

☐ Further documents are listed in the continuation of Box C.    ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 15 February 2011 (15.02.2011) | **03 Mar. 2011 (03.03.2011)** |

| Name and mailing address of the ISA/CN | Authorized officer |
|---|---|
| The State Intellectual Property Office, the P.R.China 6 Xitucheng Rd., Jimen Bridge, Haidian District, Beijing, China 100088 Facsimile No. 86-10-62019451 | **WU, Xunxun** Telephone No. (86-10)62411512 |

Form PCT/ISA /210 (second sheet) (July 2009)

## INTERNATIONAL SEARCH REPORT
Information on patent family members

| International application No. |
| --- |
| PCT/CN2010/079089 |

| Patent Documents referred in the Report | Publication Date | Patent Family | Publication Date |
| --- | --- | --- | --- |
| CN101515724A | 26.08.2009 | None | |
| CN101860059A | 28.05.2010 | None | |

Form PCT/ISA /210 (patent family annex) (July 2009)